# EUROPÄISCHE PATENTSCHRIFT

(11) **EP 2 953 980 B1**
(45) Veröffentlichungstag und Bekanntmachung des Hinweises auf die Patenterteilung: **10.05.2023**
(21) Anmeldenummer: 13704921.9
(22) Anmeldetag: 11.02.2013
(51) Int. Cl.: C08F 2/22, C08F 265/04, C08L 51/00

(54) **TRANSPARENTE ARTIKEL AUS PFROPFCOPOLYMEREN DES PVC'S**
TRANSPARENT ARTICLE MADE OF PVC GRAFT COPOLYMERS
ARTICLE TRANSPARENT À BASE DE COPOLYMÈRES GREFFÉS DE PVC

(43) Veröffentlichungstag der Anmeldung: 16.12.2015
(73) Patentinhaber: Vestolit GmbH, 45772 Marl (DE)
(72) Erfinder: BRIZZOLARA, Davide, 45701 Herten (DE); FISCHER, Ingo, 45772 Marl (DE); GEHRKE, Jan-Stephan, 45721 Haltern am See (DE); POLTE, Dieter, 46514 Schermbeck (DE); STIENEKER, Axel, 48143 Münster (DE); STURM, Harald, 46286 Dorsten (DE)
(74) Vertreter: Godemeyer Blum Lenze Patentanwälte Partnerschaft mbB - werkpatent
(86) Internationale Anmeldenummer: PCT/EP2013/052655
(87) Internationale Veröffentlichungsnummer: WO 2014/121850

(56) Entgegenhaltungen:
- EP-A1- 2 067 795
- DE-A1- 2 123 384
- GB-A- 1 530 854
- US-A1- 2007 149 713
- F. P. REDING ET AL: "Glass transition and melting point of poly(vinyl chloride)", JOURNAL OF POLYMER SCIENCE, vol. 56, no. 163, 1 January 1962 (1962-01-01), pages 225-231, XP055173329, ISSN: 0022-3832, DOI: 10.1002/pol.1962.1205616319

## Beschreibung

Die Erfindung betrifft ein Verfahren zur Herstellung von Vinylchlorid- Pfropfcopolymeren durch Emulsionspolymerisation und ein Verfahren zur Herstellung von Mischungen solcher Pfropfcopolymere. Die Erfindung betrifft außerdem transparente Formkörper hergestellt unter Verwendung der erfindungsgemäßen Pfropfcopolymere bzw. deren Mischungen.

Weichgemachtes Polyvinylchlorid (PVC) gehört nicht zur Gruppe der thermoplastischen Elastomere (TPE), obwohl es über TPE-Eigenschaften verfügt (PVC- Handbook, Charles E. Wilkes, James W. Summers, Charles Anthony Daniels - 2005, Seite 14). Aufgrund der günstigen Rohstoffkosten, der vielfältigen Verarbeitungs- und guten Produkteigenschaften nimmt es eine Sonderstellung unter den thermoplastischen Elastomeren ein. Weich-PVC hat aufgrund der Bildung von Mikrokristalliten und Dipolwechselwirkungen zwischen Chlor- und Wasserstoffatomen eine sehr gute Dehnbarkeit und Reißfestigkeit. Über den Weichmacheranteil im PVC kann sehr einfach die Härte und Flexibilität eines Produkts eingestellt werden. Das hat für den Verarbeiter große logistische Vorteile, weil er aus wenigen Einsatzstoffen eine Vielzahl an Produkten herstellen kann. Einzig die Migrationsfähigkeit des niedermolekularen Weichmachers ist als Nachteil zu betrachten. Durch die Migration des Weichmachers versprödet das Material, was zu einer Verschlechterung der mechanischen Eigenschaften führt.

Seit vielen Jahren werden verschiedene oligomere und polymere Weichmacher verwendet, die aufgrund des hohen Molekulargewichts eine geringe bis keine Tendenz zur Migration aufweisen (Domininghaus - Kunststoffe, 7., neu bearbeitete und erw. Auflage 2008). Bekannte Beispiele sind Copolymere bestehend aus Ethylen- Vinylacetat-Vinylchlorid (EVA-VC), Ethylen-Vinylacetat (EVA, Levapren^{®}), Acrylnitril- Butadien (NBR), Styrol-Butadien (SBR), Ethylen-Vinylacetat-Kohlenmonoxid (Elvaloy^{®} ), Styrol-Butadien-Styrol (SBS, Kraton^{®}) etc. Die hochmolekularen Weichmacher werden mit dem PVC gemischt oder in einer Suspensionspolymerisation mit PVC gepfropft. Diese Produkte werden nur bei Spezialanforderungen (Kälteflexibilität, geringe Migration, Fettbeständigkeit, etc.) verwendet, weil sonst die Nachteile über- wiegen, wie bspw. geringere Weichmachung, komplexere Verarbeitung, schlechtere Weiterreißfestigkeit, etc. Als besonders großer Nachteil ist anzusehen, dass Formkörper opak sind, die aus einer Mischung von PVC und den meisten polymeren Weichmachern (Elastomere) hergestellt wurden.

Die im Stand der Technik beschriebenen und in Emulsions- oder Suspensionsfahrweise hergestellten PBA-g-PVC-Pfropfcopolymere, sind nur zu transluzenten oder opaken Formkörpern verarbeitbar.

Vernetzte Polyacrylsäureester (PAE) können zur Verbesserung der Kerbschlagzähigkeit von Hart-PVC eingesetzt werden (EP 0472852). In der DE 3803036 wird ein Suspensionsverfahren beschrieben, durch das ein PVC mit einem Anteil von 65 Gew.-% eines vernetzten PAE erhalten werden kann. Das Produkt kann als Schlagzähmodifier oder als polymerer Weichmacher für PVC eingesetzt werden.

In der EP 0647663 wird ein Verfahren zur Herstellung von thermoplastisch elastomeren Pfropfcopolymerisaten des PVC's mit vernetzten Polyacrylaten als Pfropfgrundlage beschrieben.

Im Stand der Technik wird als einzig uns bekannte Methode zur Herstellung von transparenten Polyacrylsäureester modifizierten PVC-Artikeln mittels Verfahren wie Extrudieren, Spritzgießen, Kalandrieren die Verwendung von Pfropfcopolymeren beschrieben, die einen bestimmten Anteil Polystyrol in der Polyacrylatphase enthalten. Der Polystyrolanteil gleicht aufgrund seines" höheren Brechnungsindex (nD 20 = 1 ,60) den Unterschied der Brechungsindizes von Polybutylacrylat und PVC aus (Domininghaus - Kunststoffe, 7., neu bearbeitete und erw. Auflage 2008, Kapitel 2.1.2.2.1 Erhöhung der Schlagzähigkeit - Polyacrylate als Modifiziermittel für transparente PVC-Artikel, Seite 372). Aufgrund der hohen Glasübergangstemperatur von Polystyrol ist das Prinzip nur für Hart-PVC geeignet, weil der Polystyrolanteil die weichmachende Wirkung von Polyacrylaten aufhebt. Außerdem wird durch den Polystyrolanteil die UV- und Witterungsstabilität der PVC-Artikel verschlechtert. Der Erfindung lag daher die Aufgabe zu Grunde, Materialien ohne Zusatz externer Weichmacher (in gegebenenfalls unterschiedlichen Härtegraden Shore A 70 bis Shore D 80) auf Basis von Vinylchlorid bereitzustellen, die zu transparenten Folien und Formteilen verarbeitet werden kann.

EP 2 067 795 A1 offenbart ein funktionelles Vinylhalogenidpolymer, das ausgezeichnete Verarbeitungseigenschaften für die Endbenutzerverarbeitung ohne zusätzliche Verarbeitungshilfe aufweist. Das Herstellungsverfahren für funktionelle Vinylhalogenidpolymere umfasst hauptsächlich die Copolymerisation oder Pfropfpolymerisation von: (A) 90,0 Gew.-% - 99,9 Gew.-%, bezogen auf die Gesamtzusammensetzung des Vinylhalogenids oder der Monomermischung, und (B) 10,0 Gew.-% - 0,1 Gew.-% bezogen auf die Gesamtzusammensetzung der Alkylacrylatmonomere oder des Acrylpolymerlatex / -pulvers, wobei das erstere schrittweise oder alle gleichzeitig zugegeben werden kann und das letztere während der Polymerisation kontinuierlich in den Reaktor oder vor der Polymerisation in einen Reaktor geladen werden kann.

Die Druckschrift US 2007/149713 A1 offenbart die Herstellung eines neuen weichen Vinylchloridharzes, das durch Copolymerisieren von (A) einem Monomer vom Vinylchlorid-Typ und (B) einem Makromonomer mit einem Polymer erhalten wird. Dieses umfasst ein ethylenisch ungesättigtes Monomer, das eine Doppelbindung in einer Hauptkette enthält, wobei das Verhältnis von (A)/(B) nach Gewicht 50/50 bis 80/20 beträgt.

GB 1 530 854 A offenbart Vinylchloridpolymere, die weniger klebrig und leichter zu kalandrieren sind. Diese werden durch wässrige Suspensionspolymerisation von Vinylchlorid in Gegenwart einer wässrigen Emulsion eines Homopolymers eines Alkylacrylats mit einer Viskositätszahl bei 25 °C in Cyclohexanon von nicht mehr als 600 l erhalten.

DE 21 23 384 A1 beschreibt ein Verfahren zur Herstellung von nichtklebenden Vinylchloridhomo- oder mischpolymerisaten bzw. daraus verarbeiteten Formkörper oder Formteile. Das Vinylchloridhomo- oder mischpolymerisat ist vor allem für die Erzeugung von Folien bzw. Formteilen mittels Kalander geeignet.

Gegenstand der vorliegenden Erfindung ist ein Verfahren zur Herstellung eines Vinylchlorid-Pfropfcopolymers durch Emulsionspolymerisation, wobei das Pfropfcopolymer eine Pfropfgrundlage und eine aufgepfropfte zumindest teilweise aus Vinylchlorid bestehende Copolymerphase enthält, umfassend die Schritte:
a) Herstellen einer Pfropfgrundlage durch Polymerisation von Monomeren, wobei durch Wahl der verwendeten Monomere die Glasübergangstemperatur Tg der Pfropfgrundlage eingestellt wird, und
b) Aufpfropfen einer Copolymerphase auf die unter a) hergestellte Pfropfgrundlage durch Emulsionspolymerisation unter Erhalt eines Vinylchlorid-Pfropfcopolymer- Latexes, wobei durch Wahl der verwendeten Monomere und der gegebenenfalls verwendeten Comonomere die Glasübergangstemperatur Tg der aufgepfropften Copolymerphase so eingestellt wird, dass die Glasübergangstemperatur Tg der Pfropfgrundlage niedriger ist als die Glasübergangstemperatur Tg der aufgepfropften Copolymerphase, und
c) Isolieren des Vinylchlorid-Pfropfcopolymers als Feststoff aus dem Vinylchlorid-Pfropfcopolymer-Latex,
dadurch gekennzeichnet, dass die in Schritt a) hergestellte Pfropfgrundlage nicht vernetzt wird.

In einer systematischen Untersuchung wurde nämlich gefunden, dass die Vernetzung bzw. Nicht-Vernetzung der Pfropfgrundlage der Vinylchlorid-Pfropfcopolymere einen großen Einfluss auf die Transparenz daraus hergestellter Formkörper hat. Durch die Nicht-Vernetzung der Pfropfgrundlage wird die Transparenz einer aus dem entsprechenden Vinylchlorid-Pfropfcopolymer hergestellten Pressplatte stark verbessert. Dies gilt auch für Vinylchlorid-Pfropfcopolymere mit vernetzter oder mit unvernetzter Pfropfschale. Daher kann die in Schritt b) aufgepfropfte Copolymerphase vernetzt oder nicht vernetzt werden Die Glasübergangstemperatur Tg der aufgepfropften Copolymerphase liegt dabei typischerweise im Bereich von über 20 bis 120°C und/oder die der Pfropfgrund läge im Bereich von -80 bis 20°C. In einer bevorzugten Ausführungsform der Erfindung liegt die Glasübergangstemperatur Tg der aufgepfropften Copolymerphase zwischen 40 und 90 °C und die der Pfropfgrundlage zwischen -60 und -20°C. Die Tg's der aufgepfropften Copolymerphase und der Pfropfgrundlage ergeben sich aus der Zusammensetzung der jeweils verwendeten Monomere.

Der Anteil der Pfropfgrundlage beträgt bevorzugt 5 bis 70 Gew.-% und der Anteil der aufgepfropfter Copolymerphase bevorzugt 30 bis 95 Gew.-%, jeweils bezogen auf das Vinylchlorid-Pfropfcopolymer.

Die Vinylchlorid-Pfropfcopolymere werden im Emulsionsverfahren hergestellt. Dabei ist die Pfropfgrund läge durch Copolymerisation von Vinylverbindungen herstellbar. Die aufgepfropfte ist aus 60 bis 100 Gew.-%, bevorzugt 80 bis 100 Gew.-%, Vinylchlorid und aus 0 bis 40 Gew.-%, bevorzugt 0 bis 20 Gew.-%, anderen polymerisierbaren Vinylverbindungen herstellbar.

Die Emulsionspolymerisation wird bevorzugt semikontinuierlich ausgeführt. Bei der Herstellung der Pfropfgrundlage können Wasser, Initiatoren, Monomere, Emulatoren und andere Hilfsmittel vorgelegt und teilweise dosiert werden. In einer bevorzugten Ausführungsform werden Wasser und die Gesamtmenge an Emulgator vorgelegt und die Monomere sowie die Initiatoren dosiert. Die Zulaufgeschwindigkeit der Dosierungen richtet sich nach der Umsatzgeschwindigkeit. Die Polymerisationsdauer wird durch die Menge an eingesetztem Initiator auf ein bis drei Stunden eingestellt. Nach Beendigung der Polymerisation wird die Pfropfgrundlage aufgearbeitet und für die Herstellung des Pfropfcopolymers vorgelegt. Vinylchlorid und gegebenenfalls andere polymerisierbare Vinylverbindungen werden in 10 min bis 180 min zudosiert. In einer bevorzugten Ausführungsform wird die VC-Menge in eine Vorlagemenge und eine zuzudosierende Menge geteilt. Hierbei werden 5 - 20 Teile VC vorgelegt (im Schuss), bis zum Druckabfall polymerisiert und mit der Dosierung der VC-Restmenge begonnen. Die Temperatur wird angepasst, um den gewünschten K-Wert einzustellen. Um die Polymerisation voranzutreiben, wird parallel Initiator dosiert. Es kann Emulgator zugegeben werden, um die Dispersionsstabilität zu erhöhen. Der Feststoffgehalt der auspolymerisierten Dispersion liegt zwischen 20 und 60 Gew.-% und bevorzugt zwischen 30 und 55 Gew.-%.

Geeignete Vinylverbindungen für die Pfropfgrundlage sind zum Beispiel Acrylsäureester oder Methacrylsäureester (kurz: (Meth)acrylsäureester). Auch Butadien, 2-Chlor-Butadien, 1-Buten, Isopren, Vinylidenchlorid, Vinylacetat, Vinylalkylether, etc. können als Vinylverbindung verwendet werden.

Für die Pfropfung wird vorzugsweise nur Vinylchlorid verwendet. Es können aber auch (Meth)acrylsäureester, die über ein bis 12 C-Atome in der Alkylkette des veresterten linearen, verzweigten oder zyklischen Alkohols, wie z.B. Methylacrylat, Ethylacrylat, Propylacrylat, Butylacrylat, tert-Butylacrylat, Pentylacrylat, iso-Pentylacrylat, Cyclohexylacrylat, Ethylhexylacrylat, Methylmethacrylat, Ethylmethacrylat, Propylmethacrylat, Butylmethacrylat, tert-Butylmethacrylat, Pentylmethacrylat, iso-Pentylmethacrylat, Ethylhexylmethacrylat, Cyclohexylmethacrylat, etc. homo- oder copolymerisiert werden.

In Schritt b) des erfindungsgemäßen Verfahrens wird die Copolymerphase typischerweise unter Verwendung mindestens eines Emulgators durch Emulsionspolymerisation aufgepfropft, wobei vorzugsweise 60 bis 100 Gew.-% der Emulgatormenge bezogen auf die gesamte Emulgatormenge vorgelegt wird.

Die Polymerisationstemperatur bei der Herstellung jeder der Pfropfgrundlagen liegt typischerweise zwischen 20 und 90 °C, bevorzugt zwischen 60 und 85 °C.

Die Polymerisationstemperatur bei der Herstellung jeder der aufgepfropften Copolymerphasen liegt typischerweise zwischen 45 und 90 °C, bevorzugt zwischen 55 und 75 °C.

Geeignete ionische Emulgatoren sind Alkylsulfonate, Arylsulfonate, Alkylsulfate, Alkylethersulfate, Fettsäuresalze, Diarylsulfonate, etc. Es können außerdem nichtionische Emulgatoren, wie bspw. Alkyletheralkohole mit zwei bis 20 C-Atomen in der Alkylkette und ein bis 20 Ethylenglykoleinheiten, Fettalkohole, etc. allein oder in Kombination mit ionischen Emulgatoren verwendet werden. Die Gesamtmenge an Emulgator liegt zwischen 0, 1 bis 5 Gew.-% bezogen auf die eingesetzte Monomermenge.

Geeignete Initiatoren sind wasserlösliche Peroxide, die allein durch den thermischen Zerfall Radikale bilden oder in Kombination mit einem Reduktionsmittel und gegebenenfalls einem Katalysator zum Zerfall gebracht werden. Die Menge der verwendeten Initiatoren liegt erfahrungsgemäß zwischen 0,01 bis 0,5 Gew.-% bezogen auf die eingesetzten Monomere.

Die aufgepfropfte Copolymerphase kann vernetzt oder unvernetzt sein. Im Falle der Vernetzung kann in einer bevorzugter Ausführungsform der Erfindung die aufgepfropfte Copolymerphase durch Copolymerisation mit einem oder mehreren verschiedenen Monomeren, welche zwei oder mehr nicht miteinander konjugierte ethylenisch ungesättigte Doppelbindungen enthalten, vernetzt werden.

Geeignete Verbindungen für die Vernetzung sind Diallylphthalat, Allylmethacrylat, Allylacrylat, Ethylenglykoldimethacrylat, Propylenglykoldimethacrylat, Butylenglykoldiacrylat, Trimethylenglykoldiacrylat, Glycidylmethacrylat, Glycidylacrylat etc.

In dem erfindungsgemäßen Verfahren wird mittels Emulsionspolymerisation ein Vinylchlorid-Pfropfcopolymer-haltiger Latex erhalten. Der Feststoff wird dann entweder durch Zugabe eines Elektrolyten, Koagulation und mechanischen Trennverfahren wie Filtration, Dekantieren, Zentrifugieren des Latex mit nachfolgender Trocknung oder durch Sprühtrocknung abgetrennt.

In einer besonderen Ausführungsform der Erfindung werden mindestens zwei verschiedene Vinylchlorid-Pfropfcopolymere unabhängig voneinander nach dem oben beschriebenen Verfahren hergestellt und anschließend unter Erhalt einer Mischung gemischt, wobei sich die mindestens zwei verschiedenen Pfropfcopolymere durch ihre jeweilige prozentuale Gewichtsverteilung an Pfropfgrundlage und aufgepfropfter Copolymerphase voneinander unterscheiden und wobei die Mischung nur besteht aus miteinander gemischten Pfropfcopolymeren, die nach dem oben beschriebenen Verfahren hergestellt wurden.

In einer bevorzugten Ausführungsform der Erfindung werden die Schritte a), b) und c) und das Mischen so durchgeführt werden, dass die Mischung enthält
A) ein oder mehrere Pfropfcopolymere A jeweils enthaltend 41 bis 70 Gew.-% an Pfropfgrundlage und 30 bis 59 Gew.-% an aufgepfropfter Copolymerphase, und/oder
B) ein oder mehrere Pfropfcopolymere B jeweils enthaltend 26 bis 40 Gew.-% an Pfropfgrundlage und 60 bis 74 Gew.-% an aufgepfropfter Copolymerphase, und/oder
C) ein oder mehrere Pfropfcopolymere C jeweils enthaltend 5 bis 25 Gew.-% an Pfropfgrundlage und 75 bis 95 Gew.-% an aufgepfropfter Copolymerphase,
wobei die Mischung mindestens zwei verschiedene Pfropfcopolymere enthält, die unter A) und B), unter B) und C), unter A) und C) fallen, oder mindestens drei verschiedene Pfropfcopolymere, die unter A), B) und C) fallen.

Gegenstand der Erfindung ist auch ein Vinylchlorid-Pfropfcopolymer hergestellt durch Emulsionspolymerisation, enthaltend eine Pfropfgrundlage und eine aufgepfropfte zumindest teilweise aus Vinylchlorid bestehende Copolymerphase, wobei die Glasübergangstemperatur Tg der Pfropfgrundlage niedriger ist als die Glasübergangstemperatur Tg der aufgepfropften Copolymerphase, dadurch gekennzeichnet, dass die Pfropfgrundlage unvernetzt ist. Das Vinylchlorid-Pfropfcopolymer wird vorzugsweise hergestellt nach dem oben beschriebenen Verfahren. Die oben beschriebenen Merkmale des nach dem erfindungsgemäßen Verfahren hergestellten Vinylchlorid-Pfropfcopolymers gelten vorzugsweise auch für das erfindungsgemäße Vinylchlorid-Pfropfcopolymer an sich.

Ein weiterer Gegenstand der Erfindung ist eine Mischung bestehend aus zwei oder mehreren verschiedenen durch Emulsionspolymerisation hergestellten Vinylchlorid-Pfropfcopolymeren, wobei die verschiedenen Pfropfcopolymere jeweils eine Pfropfgrundlage und eine aufgepfropfte zumindest teilweise aus Vinylchlorid bestehende Copolymerphase enthalten, und wobei sich zumindest zwei der verschiedenen Pfropfcopolymere durch ihre prozentuale Gewichtsverteilung an Pfropfgrundlage und aufgepfropfter Copolymerphase unterscheiden, und wobei bei jedem der Pfropfcopolymere die Glasübergangstemperatur Tg der Pfropfgrundlage niedriger ist als die Glasübergangstemperatur Tg der aufgepfropften Copolymerphase, dadurch gekennzeichnet, dass die Pfropfgrundlagen der Pfropfcopolymere unvernetzt sind. Die Mischung bestehend aus zwei oder mehreren verschiedenen Vinylchlorid-Pfropfcopolymeren wird vorzugsweise hergestellt nach dem oben beschriebenen Verfahren.

Ebenfalls Gegenstand der Erfindung ist ein Artikel hergestellt unter Verwendung eines Vinylchlorid-Pfropfcopolymer hergestellt nach dem oben beschriebenen Verfahren oder unter Verwendung einer Mischung enthaltend verschiedene Vinylchlorid-Pfropfcopolymere hergestellt nach dem oben beschriebenen Verfahren.

Bevorzugte erfindungsgemäße Artikel weisen eine Transmission von mindestens 65%, bevorzugt mindestens 75%, und besonders bevorzugt mindestens 85%, und/oder einen Haze-Wert von höchstens 60, bevorzugt von höchstens 50, und besonders bevorzugt von höchstens 40, auf.

Gegenstand der Erfindung ist auch die Verwendung eines Vinylchlorid- Pfropfcopolymers sowie die Verwendung der oben beschriebenen Mischungen zur Herstellung eines Artikels, vorzugsweise zur Herstellung von Folien mittels Extrusion und/oder Kalandrierung oder zur Herstellung von Formkörpern mittels Extrusion oder Spritzguss.

In den folgenden Beispielen wird das erfindungsgemäße Verfahren zur Herstellung von Pfropfcopolymeren des Vinylchlorids mit hoher Transparenz beschrieben.

### Beispiele

### Beispiel 1

### Pfropfgrundlage:

In einem 10-L-Rührreaktor mit einem wassergekühlten Doppelmantel und ausgestattet mit einem Blattrührer wurden 1 166 g VE-Wasser, 68,6 g Butylacrylat, 3088 g 1 %ige Kaliummyristatlösung und 0,63 g Kaliumperoxodisulfat vorgelegt und auf 80 °C aufgeheizt. Nachdem die Reaktion angesprungen war, wurde mit der Dosierung von 686 g einer 0,3 %igen wässrigen Kaliumperoxodisulfatösung in 180 min begonnen. Parallel wurden 1990 g Butylacrylat in 180 min dosiert. Nach Dosier- Ende wurde die Reaktor-Innentemperatur noch für 60 min gehalten und danach abgekühlt. Es wurden 6894 g Dispersion ausgefahren mit einem Feststoffgehalt von 30 Gew-%, Oberflächenspannung 51 ,6 mN/m und pH-Wert 7,6. Der mittlere volumenbezogene Teilchendurchmesser beträgt 12 nm.

### Pfropfcopolymer:

In einem 10-L-Druckautoklaven mit wassergekühltem Doppelmantel und Blattrührer wurden 124 g Wasser, 1937 g einer 1 %igen Kaliummyristatlösung, 3500 g der Pfropfgrundlage und 1283 g Vinylchlorid vorgelegt und auf 68°C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 31 ,3 Gew.-%, die Oberflächenspannung 56,6 mN/m, der pH-Wert 8,3. Der mittlere volumenbezogene Teilchendurchmesser beträgt 68 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 48,6 Gew-% bestimmt.

### Beispiel 2

### Pfropfgrundlage:

Die Pfropfgrundlage wurde in Anlehnung an Beispiel 1 hergestellt. Es wurden 6936 g Dispersion ausgefahren mit einem Feststoffgehalt von 30 Gew-%, Oberflächenspannung 49 mN/m und pH-Wert 7,5. Der mittlere volumenbezogene Teilchendurchmesser beträgt 14 nm.

### Pfropfcopolymer:

Es wurden 407 g Wasser, 2471 g einer 1 %igen Kaliummyristatlösung, 2330 g der Pfropfgrundlage und 1633 g Vinylchlorid vorgelegt und in Anlehnung an Beispiel 1 polymerisiert. Die Dispersion wurde ausgefahren. Der Feststoffgehalt der Dispersion betrug 30,1 %, die Oberflächenspannung 57,8 mN/m, der pH-Wert 8,8. Der mittlere volumenbezogene Teilchendurchmesser beträgt 64 nm. Der Ansatz wurde mit Calciumchlorid gefällt und abgenutscht. Der Rückstand wurde bei 30"C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 34,4 Gew-% bestimmt.

### Beispiel 3

### Pfropfgrundlage:

Es wurde die Pfropfgrundlage aus Beispiel 2 verwendet.

### Pfropfcopolymer:

Es wurden 894 g Wasser, 2800 g einer 1 %igen Kaliummyristatlösung, 1167 g der Pfropfgrundlage und 1983 g Vinylchlorid vorgelegt und in Anlehnung an Beispiel 1 polymerisiert. Die Dispersion wurde ausgefahren. Der Feststoffgehalt der Dispersion betrug 29,7 %, die Oberflächenspannung 59,1 mN/m, der pH-Wert 9,0. Der mittlere volumenbezogene Teilchendurchmesser beträgt 46 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 26,6 Gew-% bestimmt.

### Beispiel 4

### Pfropfgrundlage:

In einem 10-L-Rührreaktor mit einem wassergekühlten Doppelmantel und ausgestattet mit einem Blattrührer wurden 1791 g VE-Wasser, 68,6 g Butylacrylat, 0,63 g Kaliumperoxodisulfat und 61,76 g einer 1 %igen Kaliummyristatlösung vorgelegt und auf 80 °C aufgeheizt. Nachdem die Reaktion angesprungen war, wurden 1029 g einer 0,2 %igen wässrigen Kaliumperoxodisulfatlösung, 1990 g Butylacrylat und 2059 g einer 1 %igen Kaliummyristatlösung in 180 min dosiert. Nach Dosier- Ende wurde die Reaktor-Innentemperatur noch für 60 min gehalten und danach abgekühlt. Es wurden 6964 g einer wässrigen Dispersion mit einem Feststoffgehalt von 29,4 Gew-%, Oberflächenspannung 50,1 mN/m und pH-Wert 8,1 erhalten. Der mittlere volumenbezogene Teilchendurchmesser beträgt 227 nm.

### Pfropfcopolymer:

In einem 10-L-Druckautoklaven mit wassergekühltem Doppelmantel und Blattrührer wurden 1863 g Wasser, 482 g einer 1 %igen Kaliummyristatlösung, 3280 g der Pfropfgrundlage vorgelegt und auf 68 °C aufgeheizt. Anschließend werden 120,6 g Vinylchlorid zugegeben und weitere 1326 g Vinylchlorid in 100 min dosiert. Für die Aktivierung wurden Wasserstoffperoxid- und Ascorbinsäurelösungen verwendet deren Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 30,2 Gew-%, die Oberflächenspannung 53 mN/m, der pH-Wert 7,3. Der mittlere volumenbezogene Teilchendurchmesser beträgt 301 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 46,6 Gew-% bestimmt.

### Beispiel 5

### Pfropfgrundlage:

In einem 10-L-Rührreaktor wurden 3637 g VE-Wasser, 68,64 g Butylacrylat, 617,6 g Kaliummyristat (Konzentration 5 Gew-%) und 0,63 g Kaliumperoxodisulfat vorgelegt und auf 80°C aufgeheizt. Nachdem die Reaktion angesprungen war wurde mit der Dosierung von 686 g einer 0,3 %igen wässrigen Kaliumperoxodisulfatösung in 180 min begonnen. Parallel wurde 1990 g Butylacrylat in 180 min dosiert. Nach Dosierende wurde die Reaktor-Innentemperatur noch für 60 min gehalten und danach abgekühlt. Es wurden 6947 g einer wässrigen Dispersion mit einem Feststoffgehalt von 29,9 Gew-%, Oberflächenspannung 50,3 und pH-Wert 7,5 erhalten. Der mittlere volumenbezogene Teilchendurchmesser beträgt 23 nm.

### Pfropfcopolymer:

Es wurden 064 g Wasser, 332 g einer 5 %igen Kaliummyristatlösung, 3144 g der Pfropfgrundlage, 1052 g Vinylchlorid und 8,0 g Diallylphthalat vorgelegt und in Anlehnung an Beispiel 1 polymerisiert. Der Feststoffgehalt der Dispersion betrug 30,3 Gew-%, die Oberflächenspannung 55,6 mN/m, der pH-Wert 7,6. Der mittlere volumenbezogene Teilchendurchmesser beträgt 102 nm. Der Ansatz wurde mit Calciumchlorid gefällt und abgenutscht. Der Rückstand wurde bei 30 °C im Umluft-trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 50 Gew-% bestimmt.

### Beispiel 6

### Pfropfgrundlage:

In einem 10-L-Rührreaktor wurden 1791 g VE-Wasser, 68,64 g Butylacrylat, 61 ,76 g Kaliummyristat (Konzentration 1 Gew-%) und 0,63 g Kaliumperoxodisulfat vorgelegt und auf 80 °C aufgeheizt. Nachdem die Reaktion angesprungen war wurde mit der Dosierung von 1029 g einer 0,2 %igen wässrigen Kaliumperoxodisulfatösung in 180 min begonnen. Parallel wurden 1990 g Butylacrylat und 2059 g einer 1 %igen Kaliummyristatlösung in 180 min dosiert. Nach Dosierende wurde die Reaktor- Innentemperatur noch für 60 min gehalten und danach abgekühlt. Es wurden 6824 g einer wässrigen Dispersion mit einem Feststoffgehalt von 29,5 Gew-%, Oberflächenspannung 47,1 mN/m und pH-Wert 8,4 erhalten. Der mittlere volumenbezogene Teilchendurchmesser beträgt 274 nm.

### Pfropfcopolymer:

Der Ansatz wurde in Anlehnung an Beispiel 5 hergestellt. Der Feststoffgehalt der Dispersion betrug 27,2 Gew-%, die Oberflächenspannung 42,1 mN/m, der pH-Wert 10 8,5. Der mittlere volumenbezogene Teilchendurchmesser beträgt 321 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 55,7 Gew-% bestimmt.

### Zur experimentellen Durchführung:

### Teilchenqrößenmessunq:

0 Die Teilchengrößenverteilungen wurden mit einem Microtrac Blue-Wave der S 3500-Serie von Particle-Metrix gemessen. Der zulässige Messbereich liegt zwischen 0,01 und 2000 µm. Für die Messung wurde eine Standardprozedur für Dispersionen angelegt, in der bestimmte physikalische Eigenschaften der Dispersion hinterlegt sind. Vor der Messung werden drei Tropfen Hellmanex^{®} der Firma Hellmanex-Analytics mit einer 3-ml-Einwegpipette zu dem vollentsalztem Wasser in die Zirkulationseinheit gegeben. Die Sauberkeit des Messsystems wird durch eine Nullmessung überprüft. Es wird solange vorsichtig Dispersion in die Probeneinheit gegeben, bis ein Loading-Factor von ca. 0,004 erreicht wird. In der Regel sind das 1 bis 2 Tropfen Dispersion. Die Messdauer beträgt 30 s. Die Auswertung der Messung erfolgt automatisch. Es wird der mittlere volumenbezogene Teilchendurchmesser verwendet.

### Zweirollen-Walzwerk (inklusive Verarbeitungsbedingungen und Rezeptur)

Zur Bestimmung mechanischer Werte und optischer Eigenschaften müssen Probekörper bereitgestellt werden. Die Herstellung der Walzfelle erfolgt unter folgenden Bedingungen.
Rezeptur (Spatelmischung)
   100 phr Polymer
   1,5 phr BaZn-Stabilisator (Baerostab UBZ 171)
   3,0 phr epoxydiertes Sojabohnenöl (Edenol D 81)
   0,1 phr Isotridecylstearat (Loxiol G 40)
   0,2 phr hochmolekularer Mehrkomponentenester (Loxiol G 72)
   0,1 phr Calciumstearat (Ceasit SW)
Walzwerk (Schwabenthan)
   Walzenmaterial: verchromte Oberflächen
   Walzendurchmesser: 150 mm
   Drehzahlverhältnis: 17/21 1/min
   Walzentemperatur: 140 °C
   Walzdauer: 5 min

### Ausführung:

Das Pulver-Compound wird zur Bildung einer zusammenhängenden Masse (Fell) auf die Walze gegeben. Nach Fellbildung wird das Fell 3 min "geschnitten" und "gewendet". Dann die Walzfelldicke auf 1 ,1 mm einstellen und das Fell noch weitere 2 min ohne Schneiden und Wenden auf der Walze plastifizieren. Nach vorgegebener Walzzeit wird das Walzfell abgenommen.

### Presse:

30-t-Laborpresse (Werner & Pfleiderer URH 30)
Pressfläche: 350 × 350 mm
Pressbleche: verchromte Flächen
Pressrahmen: 220 × 220 × 1,0 mm

### Ausführung:

Zur Herstellung der Pressplatten werden die zuvor gefertigten Walzfelle entsprechend der verwendeten Rahmengröße zugeschnitten, in den Rahmen eingelegt und zusammen mit den die Außenflächen bildenden Pressblechen in die Laborpresse eingelegt. Unter den nachfolgend genannten Bedingungen werden die Felle zu einer Pressplatte ausgeformt.

| | |
|---|---|
| Presstemperatur: 150 °C | |
| ND-Pressdruck: 30 bar | ND-Presszeit: 2 min |
| HD-Pressdruck: 200 bar | HD-Presszeit: 3 min |
| Entformtemperatur: 40 °C | |
| Kühldruck: 200 bar | Abkühlzeit: ca. 8 min |

### Transmission und Haze (Großwinkel-Streuung)

Zur Beurteilung der Transparenz einer Folie werden zwei Werte herangezogen:
- Die Gesamttransmission (hier: "Transmission"), die das Verhältnis von durchgelassenem zu einfallendem Licht darstellt und von den Absorptionseigenschaften sowie von den Oberflächenbedingungen abhängig ist
- Die Großwinkelstreuung (Haze), welche ein Maß für die Trübung ist.

### Messung:

Die Messung der Transmission sowie die Bestimmung der Großwinkelstreuung der über Walzen/Pressen erzeugten Halbzeuge erfolgt mit dem Transparenzmessgerät Haze-Guard Dual der Firma Byk-Gardner.

Die zu messende Probe wird senkrecht beleuchtet und das durchgelassene Licht in einer integrierenden Kugel photoelektrisch gemessen. Hierbei wird das senkrecht durchgelassene Licht zur Transmissionsbeurteilung sowie das im Winkel von 2° zur Einstrahlungsachse streuende Licht zur Beurteilung der Trübung (Haze) gemessen. Die Messungen werden nach ISO 13468 durchgeführt, dadurch ist gewährleistet, das die Messbedingungen bei der Kalibrierung sowie bei der Messung gleich sind.

**Tabelle 1: Übersicht Versuchs-und Vergleichsbeispiele und daraus hergestellte Pressplatten**

| PatentBeispiele | PBA-Anteil (Gew-%) | Microtrac MV (nm) | Shore-Härte A | Shore-Härte D | Dicke Pressplatte (mm) | Transmission, % | Haze | Bemerkung |
|---|---|---|---|---|---|---|---|---|
| Beispiel 1 | 48,6 | 68 | 88 | 28 | 1,46 | 84,7 | 11,2 | Pfropfgrundlage und Pfropfschale unvernetzt |
| Beispiel 2 | 34,4 | 64 | | 53 | 1,46 | 77,2 | 36,5 | |
| Beispiel 3 | 26,6 | 46 | | 64 | 1,63 | 72,2 | 26,8 | |
| Beispiel 4 | 46,6 | 301 | | 39 | 1,35 | 83,3 | 7,65 | |
| Beispiel 5 | 50 | 102 | 84 | 29 | 1,6 | 85,3 | 11,7 | Pfropfgrundlage unvernetzt und Pfropfschale vernetzt |
| Beispiel 6 | 55,7 | 321 | 52 | 10 | 1,68 | 69,5 | 26,5 | |
| Mischungsbeispiel 1 | 41,5 | | | 41 | 1,56 | 78,4 | 24,4 | 0,50 Beispiel 1 + 0,50 Beispiel 2 |
| Vinnolit VK 710 | Ca. 50 | | 85 | 28 | 1,48 | 78 | 65,8 | Wettbewerbsmuster |
| Vinnolit 707 E | Ca. 50 | | 79 | 25 | 1,81 | 53,9 | 68,8 | |

Die Pfropfcopolymere Vinnolit VK 710 und Vinnolit K 707 E mit einem Acrylatanteil von ca. 50 Gew-% repräsentieren den Stand der Technik. Vor allem aufgrund des hohen Haze-Wertes (charakterisiert die Großwinkel-Streuung) erscheinen die Pressplatten transluzent bis opak. Die erfindungsgemäßen Beispiele verfügen über eine deutlich bessere Transparenz, die sich vor allem durch ein wesentlich geringeres Streuverhalten auszeichnet. Die Versuchs- und Vergleichsbeispiele belegen den Effekt der Vernetzung der Pfropfgrundlage der Pfropfcopolymere auf die Transparenz daraus hergestellter PVC-Artikel.

## Patentansprüche

1. Verfahren zur Herstellung eines Vinylchlorid-Pfropfcopolymers durch Emulsionspolymerisation, wobei das Pfropfcopolymer eine Pfropfgrundlage und eine aufgepfropfte zumindest teilweise aus Vinylchlorid bestehende Copolymerphase enthält, umfassend die Schritte:
a) Herstellen einer Pfropfgrundlage durch Polymerisation von Monomeren, wobei durch Wahl der verwendeten Monomere die Glasübergangstemperatur Tg der Pfropfgrundlage eingestellt wird, und
b) Aufpfropfen einer Copolymerphase auf die unter a) hergestellte Pfropfgrundlage durch Emulsionspolymerisation unter Erhalt eines Vinylchlorid-Pfropfcopolymer-Latexes, wobei durch Wahl der verwendeten Monomere und der gegebenenfalls verwendeten Comonomere die Glasübergangstemperatur Tg der aufgepfropften Copolymerphase so eingestellt wird, dass die Glasübergangstemperatur Tg der Pfropfgrundlage niedriger ist als die Glasübergangstemperatur Tg der aufgepfropften Copolymerphase, und
c) Isolieren des Vinylchlorid-Pfropfcopolymers als Feststoff aus dem Vinylchlorid-Pfropfcopolymer-Latex,
**dadurch gekennzeichnet, dass** die in Schritt a) hergestellte Pfropfgrundlage nicht vernetzt und die in Schritt b) aufgepfropfte Copolymerphase vernetzt wird.

2. Verfahren nach einem der vorherigen Ansprüche, wobei der Anteil der Pfropfgrundlage 5 bis 70 Gew.-% und der Anteil der aufgepfropfter Copolymerphase 30 bis 95 Gew.-%, jeweils bezogen auf das Vinylchlorid-Pfropfcopolymer, beträgt.

3. Verfahren nach einem der vorherigen Ansprüche, wobei die aufgepfropfte Copolymerphase aus 60 bis 100 Gew.-% Vinylchlorid und aus 0 bis 40 Gew.-% anderen polymerisierbaren Vinylverbindungen hergestellt wird.

4. Verfahren, wobei mindestens zwei verschiedene Pfropfcopolymere unabhängig voneinander nach einem der vorherigen Ansprüche hergestellt und anschließend unter Erhalt einer Mischung gemischt werden, **dadurch gekennzeichnet, dass** sich die mindestens zwei verschiedenen Pfropfcopolymere durch ihre jeweilige prozentuale Gewichtsverteilung an Pfropfgrundlage und aufgepfropfter Copolymerphase voneinander unterscheiden und dass die Mischung nur besteht aus miteinander gemischten Pfropfcopolymeren, die nach einem der vorherigen Ansprüche hergestellt wurden.

5. Verfahren nach Anspruch 4, wobei die Schritte a), b) und c) und das Mischen so durchgeführt werden, dass die Mischung enthält
A) ein oder mehrere Pfropfcopolymere A jeweils enthaltend 41 bis 70 Gew.-% an Pfropfgrundlage und 30 bis 59 Gew.-% an aufgepfropfter Copolymerphase, und/oder
B) ein oder mehrere Pfropfcopolymere 8 jeweils enthaltend 26 bis 40 Gew.-% an Pfropfgrundlage und 60 bis 74 Gew.-% an aufgepfropfter Copolymerphase, und/oder
C) ein oder mehrere Pfropfcopolymere C jeweils enthaltend 5 bis 25 Gew.-% an Pfropfgrundlage und 75 bis 95 Gew.-% an aufgepfropfter Copolymerphase,
wobei die Mischung mindestens zwei verschiedene Pfropfcopolymere enthält, die unter A) und B), unter B) und C), unter A) und C) fallen, oder mindestens drei verschiedene Pfropfcopolymere, die unter A), B) und C) fallen.

6. Vinylchlorid-Pfropfcopolymer hergestellt durch Emulsionspolymerisation, enthaltend eine Pfropfgrundlage und eine aufgepfropfte zumindest teilweise aus Vinylchlorid bestehende Copolymerphase, wobei die Glasübergangstemperatur Tg der Pfropfgrundlage niedriger ist als die Glasübergangstemperatur Tg der aufgepfropften Copolymerphase, **dadurch gekennzeichnet, dass** die Pfropfgrundlage unvernetzt und die aufgepropfte Copolymerphase vernetzt ist.

7. Mischung enthaltend verschiedene Vinylchlorid-Pfropfcopolymere, hergestellt nach einem Verfahren nach Anspruch 4 oder 5.

8. Mischung bestehend aus zwei oder mehreren verschiedenen durch Emulsionspolymerisation hergestellten Vinylchlorid-Pfropfcopolymeren, wobei die verschiedenen Pfropfcopolymere jeweils eine Pfropfgrundlage und eine aufgepfropfte zumindest teilweise aus Vinylchlorid bestehende Copolymerphase enthalten, und wobei sich zumindest zwei der verschiedenen Pfropfcopolymere durch ihre prozentuale Gewichtsverteilung an Pfropfgrundlage und aufgepfropfter Copolymerphase unterscheiden, und wobei bei jedem der Pfropfcopolymere die Glasübergangstemperatur Tg der Pfropfgrundlage niedriger ist als die Glasübergangstemperatur Tg der aufgepfropften Copolymerphase, **dadurch gekennzeichnet, dass** die Pfropfgrundlagen der Pfropfcopolymere unvernetzt und die aufgepropften Copolymerphasen vernetzt sind.

9. Artikel, hergestellt unter Verwendung eines Vinylchlorid-Pfropfcopolymers nach Anspruch 6 oder unter Verwendung einer Mischung nach Anspruch 7 oder 8.

10. Artikel nach Anspruch 9, wobei der Artikel eine Transmission von mindestens 65% und/oder einen Haze-Wert von höchstens 60 aufweist.

11. Verwendung eines Pfropfcopolymers nach Anspruch 6 oder einer Mischung nach Anspruch 8 oder 9 zur Herstellung eines Artikels, vorzugsweise zur Herstellung von Folien mittels Extrusion und/oder Kalandrierung oder zur Herstellung von Formkörpern mittels Extrusion oder Spritzguss.

## Claims

1. A method for preparing a vinyl chloride graft copolymer by emulsion polymerization, wherein the graft copolymer contains a graft base and a grafted copolymer phase that consists at least partially of vinyl chloride, comprising the steps:
a) preparing a graft base by polymerization of monomers, wherein by selecting the monomers used the glass transition temperature Tg of the graft base is adjusted, and
b) grafting a copolymer phase onto the graft base prepared in a) by emulsion polymerization, thereby obtaining a vinyl chloride graft copolymer latex, wherein by selecting the monomers used and the optionally used comonomers the glass transition temperature Tg of the grafted copolymer phase is adjusted in such a way that the glass transition temperature Tg of the graft base is lower than the glass transition temperature Tg of the grafted copolymer phase, and
c) isolating the vinyl chloride graft copolymer as a solid from the vinyl chloride graft copolymer latex,
**characterized in that** the graft base prepared in step a) is not being cross-linked and the copolymer phase grafted in step b) is being cross-linked.

2. The method according to any one of the preceding claims, wherein the percentage of the graft base is 5 to 70 % by weight and the percentage of the grafted copolymer phase is 30 to 95 % by weight, each based on the vinyl chloride graft copolymer.

3. The method according to any one of the preceding claims, wherein the grafted copolymer phase is prepared from 60 to 100 % by weight of vinyl chloride and from 0 to 40 % by weight of other polymerizable vinyl compounds.

4. A method, wherein at least two different graft copolymers are prepared independently of each other according to any one of the preceding claims and subsequently mixed to yield a blend, **characterized in that** the at least two different graft copolymers differ from each other by their respective percentage weight distribution of graft base and grafted copolymer phase and that the blend consists only of graft copolymers, prepared according to any one of the preceding claims, mixed with each other.

5. The method according to claim 4, wherein the steps a), b) and c) and the mixing are performed in such a way that the blend contains:
A) one or more graft copolymers A, each containing 41 to 70 % by weight of graft base and 30 to 59 % by weight of grafted copolymer phase, and/or
B) one or more graft copolymers B, each containing 26 to 40 % by weight of graft base and 60 to 74 % by weight of grafted copolymer phase, and/or
C) one or more graft copolymers C, each containing 5 to 25 % by weight of graft base and 75 to 95 % by weight of grafted copolymer phase,
wherein the blend contains at least two different graft copolymers that belong to A) and B), to B) and C), to A) and C), or at least three different graft copolymers that belong to A), B) and C).

6. A vinyl chloride graft copolymer, prepared by emulsion polymerization, containing a graft base and a grafted copolymer phase that consists at least partially of vinyl chloride, wherein the glass transition temperature Tg of the graft base is lower than the glass transition temperature Tg of the grafted copolymer phase, **characterized in that** the graft base is not cross-linked and the grafted copolymer phase is cross-linked.

7. A blend, containing different vinyl chloride graft copolymers, prepared according to a method according to claim 4 or 5.

8. A blend, consisting of two or more different vinyl chloride graft copolymers, prepared by emulsion polymerization, the different graft copolymers each containing a graft base and a grafted copolymer phase that consists at least partially of vinyl chloride, and wherein at least two of the different graft copolymers differ from each other by their percentage weight distribution of graft base and grafted copolymer phase, and wherein for each graft copolymer the glass transition temperature Tg of the graft base is lower than the glass transition temperature Tg of the grafted copolymer phase, **characterized in that** the graft bases of the graft copolymers are not cross-linked and the grafted copolymer phases are cross-linked.

9. An article, prepared by using a vinyl chloride graft copolymer according to claim 6 or by using a blend according to claim 7 or 8.

10. The article according to claim 9, wherein the article has a transmission of at least 65 % and/or a haze value of at most 60.

11. Use of a graft copolymer according to claim 6 or a blend according to claim 8 or 9 for preparing an article, preferably for preparing films by way of extrusion and/or calendering, or for manufacturing molded articles by way of extrusion or injection molding.

## Revendications

1. Procédé de préparation d'un copolymère greffé de chlorure de vinyle par polymérisation en émulsion, dans lequel le copolymère greffé contient une base de greffage et une phase copolymère greffée consistant au moins partiellement en du chlorure de vinyle, comprenant les étapes consistant à :
a) préparer une base de greffage par polymérisation de monomères, dans lequel le choix des monomères utilisés permet de régler la température de transition vitreuse Tg de la base de greffage, et
b) greffer une phase copolymère sur la base de greffage préparée en a) par polymérisation en émulsion pour obtenir un latex de copolymère greffé de chlorure de vinyle, dans lequel, par le choix des monomères utilisés et des comonomères facultativement utilisés, la température de transition vitreuse Tg de la phase copolymère greffée est réglée de sorte que la température de transition vitreuse Tg de la base de greffage soit inférieure à la température de transition vitreuse Tg de la phase copolymère greffée, et
c) isoler le copolymère greffé de chlorure de vinyle sous forme solide à partir du latex de copolymère greffé de chlorure de vinyle,
**caractérisé en ce que** la base de greffage préparée à l'étape a) n'est pas réticulée et la phase copolymère greffée à l'étape b) est réticulée.

2. Procédé selon l'une quelconque des revendications précédentes, dans lequel la proportion de la base de greffage est de 5 à 70 % en poids et la proportion de la phase copolymère greffée est de 30 à 95 % en poids, respectivement par rapport au copolymère greffé de chlorure de vinyle.

3. Procédé selon l'une quelconque des revendications précédentes, dans lequel la phase copolymère greffée est préparée à partir de 60 à 100 % en poids de chlorure de vinyle et de 0 à 40 % en poids d'autres composés vinyliques polymérisables.

4. Procédé dans lequel au moins deux copolymères greffés différents sont préparés indépendamment l'un de l'autre selon l'une quelconque des revendications précédentes et sont ensuite mélangés pour obtenir un mélange, **caractérisé en ce que** les au moins deux copolymères greffés différents se distinguent l'un de l'autre par leur répartition en poids respective de base de greffage et de phase de copolymère greffé et **en ce que** le mélange consiste uniquement en des copolymères greffés mélangés entre eux qui ont été préparés selon l'une quelconque des revendications précédentes.

5. Procédé selon la revendication 4, dans lequel les étapes a), b) et c) et le mélange sont effectués de sorte que le mélange contient
A) un ou plusieurs copolymères greffés A comprenant chacun 41 à 70 % en poids de base de greffage et 30 à 59 % en poids de phase copolymère greffée, et/ou
B) un ou plusieurs copolymères greffés B comprenant chacun 26 à 40 % en poids de base de greffage et 60 à 74 % en poids de phase copolymère greffée, et/ou
C) un ou plusieurs copolymères greffés C comprenant respectivement 5 à 25 % en poids de base de greffage et 75 à 95 % en poids de phase copolymère greffée,
dans lequel le mélange contient au moins deux copolymères greffés différents parmi A) et B), parmi B) et C), parmi A) et C), ou au moins trois copolymères greffés différents parmi A), B) et C).

6. Copolymère greffé de chlorure de vinyle préparé par polymérisation en émulsion, comprenant une base de greffage et une phase copolymère greffée consistant au moins partiellement en du chlorure de vinyle, dans lequel la température de transition vitreuse Tg de la base de greffage est inférieure à la température de transition vitreuse Tg de la phase copolymère greffée, **caractérisé en ce que** la base de greffage est non réticulée et la phase copolymère greffée est réticulée,

7. Mélange comprenant différents copolymères greffés de chlorure de vinyle, préparé selon un procédé selon la revendication 4 ou 5.

8. Mélange consistant en deux ou plusieurs copolymères greffés de chlorure de vinyle différents préparés par polymérisation en émulsion, dans lequel les différents copolymères greffés contiennent respectivement une base de greffage et une phase copolymère greffée consistant au moins partiellement en du chlorure de vinyle, et dans lequel au moins deux des différents copolymères greffés se distinguent par leur répartition en poids en pourcentage de base de greffage et de phase copolymère greffée, et dans lequel, pour chacun des copolymères greffés, la température de transition vitreuse Tg de la base de greffage est inférieure à la température de transition vitreuse Tg de la phase copolymère greffée, **caractérisé en ce que** les bases de greffage des copolymères greffés sont non réticulées et les phases copolymères greffées sont réticulées.

9. Article fabriqué en utilisant un copolymère greffé de chlorure de vinyle selon la revendication 6 ou en utilisant un mélange selon la revendication 7 ou 8.

10. Article selon la revendication 9, dans lequel l'article présente une transmission d'au moins 65 % et/ou une valeur Haze d'au plus 60.

11. Utilisation d'un copolymère greffé selon la revendication 6 ou d'un mélange selon la revendication 8 ou 9 pour la fabrication d'un article, de préférence pour la fabrication de films par extrusion et/ou calandrage ou pour la fabrication de corps moulés par extrusion ou moulage par injection.
